# EUROPÄISCHE PATENTANMELDUNG

(11) **EP 2 183 974 A1**
(43) Veröffentlichungstag der Anmeldung: **12.05.2010**
(21) Anmeldenummer: 09175098.4
(22) Anmeldetag: 05.11.2009
(51) Int. Cl.: A22C 17/00, A47J 37/04, B65B 11/04

(54) **Vorrichtung und Verfahren zur Verpackung eines Spießes mit einseitig auf den Spieß aufgestecktem Spießgut**

(30) Priorität: 05.11.2008 DE 102008055990
(71) Anmelder: Serindik, Nihat, 50259 Köln (DE)
(72) Erfinder: Serindik, Nihat, 50259 Köln (DE)
(74) Vertreter: Moore, Joanne Camilla

(57) **Zusammenfassung**

Die Erfindung betrifft eine Vorrichtung und ein Verfahren zur Verpackung eines Spießes mit einseitig auf den Spieß aufgestecktem Spießgut.

Die Vorrichtung weist einen Wickeltisch zur Aufnahme des Spießes und wenigstens einen Folienwickler zur Aufnahme einer Folienrolle mit bandförmig aufgewickelter Folie und zum Abwickeln der Folie auf und der Folienwickler ist in einem vorbestimmten Abstand vom Spießgut im Wesentlichen parallel zur Spießachse linear bewegbar.

Das Verfahren ist durch einen oder mehreren der folgenden Verfahrensschritte gekennzeichnet, wobei der Spieß über den Spießfuß auf dem Drehelement kippfrei verankert wird, elastisches Folienband mit wenigstens mehr als einem Wurf im Wesentlichen parallel zur Spießachse um das Spießgut vorgespannt wird und elastisches Folienband mit wenigstens mehr als einer Wicklung vom Spießfuß ausgehend um das Spießgut gewickelt wird.

## Beschreibung

Die Erfindung betrifft eine Vorrichtung und ein Verfahren zur Verpackung eines Spießes mit einseitig auf den Spieß aufgestecktem Spießgut.

Spieße mit einseitig auf den Spieß aufgestecktem Spießgut werden insbesondere als sogenannte Döner-Spieße in einer Grillvorrichtung eingesetzt, wobei vorbereitetes Fleisch in Form Lappen kombiniert mit Hackfleisch mehrlagig übereinander auf den Spieß gesteckt und eine im Wesentlichen konische Spießform erzeugt wird.

Der Spieß wird dazu von einem Spießgutteller zur Spießspitze hin mit Fleischlappen aufgebaut, wobei der Durchmesser des Spießes üblicherweise am Spießteller geringer ist als an der Spießspitze. Döner-Spieße weißen unterschiedliche Abmessungen auf, die je nach Verwendungszweck zwischen 30-80 cm Spießlänge liegen können. Der maximale Durchmesser der Spieße hängt dabei von der Spießlänge ab.

Zur Herstellung des Fleischspießes wird ein Spießrohr auf einem Steckgestell angeordnet. Das Steckgestell umfasst den Spießfuß, die Spießstange mit der Spießspitze, welche etwas oberhalb des der Spießspitze abgewandten Endes Haltemittel für einen Spießgutteller aufweist. Zwischen dem Spießgutteller und der Spießspitze werden vorgewürzte Fleischlappen lagenweise aufgesteckt. Sobald der Fleischspieß vollständig aufgesteckt ist, wird die typische Kegelform geschnitten. Zum Transport und für die Lagerung werden die Spieße in Kunststofffolie verpackt. Damit die Spieße in Form bleiben sowie wegen der im serienmäßigen Herstellungsverfahren ständig wechselnden Abmessungen der Spieße hat sich für die Verpackung als zweckmäßig erwiesen, vertriebsfertige Spieße mit Folienband zu umwickeln. Dabei wird etwa 20-50 cm breites Folienband von Folienrollen abgewickelt und in mehreren Lagen dicht im Umfang um den Fleischspieß gewickelt.

Aufgrund der Konsistenz des Fleisches wird der Spieß in herkömmlichen Verfahren manuell mit dem Folienband umwickelt. Eine automatisierte Umwicklung mit Folienband ist mit herkömmlichen Verpackungsvorrichtungen fehlerbehaftet. Da das Spießgut insbesondere bei Fleischspießen beim Umwickeln in Richtung des nicht umwickelten Teils des Spießes gedrückt werden kann, führt zu großer Folienzug bei der Verpackung dazu, dass das Fleisch durch die Folie vom Spieß gedrückt wird oder die gewünschte typische Konusform unbeabsichtigt verändert wird. Dies führt zu Qualitätsverlusten. Insbesondere kann eine fehlerhafte Folienwicklung zu Undichtigkeiten führen. Dies verursacht bei der Kühlung und Lagerung im Anschluss an die Verpackung Schäden am Spießgut, was aus hygienischen Gründen von der Weiterverarbeitung und vom Verkauf an Endabnehmer beziehungsweise Verbraucher ausgeschlossen werden muss.

Für die serienmäßige Verpackung im Inlineverfahren hat sich die manuelle Verpackungsmethode als ineffizient erwiesen. Zudem ist die manuelle Verpackung personalaufwendig, wobei das Personal hierzu aufwendig geschult werden muss.

Aufgabe der Erfindung ist es daher eine Vorrichtung sowie ein Verfahren zur Verpackung eines Spießes mit einseitig auf den Spieß aufgestecktem Spießgut zur Verfügung zu stellen, welche die vorbeschriebenen Nachteile überwinden. Aufgabe ist es insbesondere eine Möglichkeit bereitzustellen, welche eine automatisierte Verpackung eines Spießes mit einseitig auf den Spieß aufgestecktem Spießgut gewährleistet und im Inlineverfahren einsetzbar ist und wodurch die hygienische und effiziente Verpackung dieser Lebensmittel gewährleistet ist.

Erfindungsgemäß wird die Aufgabe gelöst mittels einer Vorrichtung gemäß Anspruch 1. Die nachgeordneten Ansprüche stellen erfinderische Ausführungsformen dar.

Hinsichtlich der Vorrichtung wird die Aufgabe dadurch gelöst, dass die Vorrichtung einen Wickeltisch zur Aufnahme des Spießes und wenigstens einen Folienwickler zur Aufnahme einer Folienrolle mit bandförmig aufgewickelter Folie und zum Abwickeln der Folie aufweist und dass der Folienwickler in einem vorbestimmten Abstand vom Spießgut im Wesentlichen parallel zur Spießachse linear bewegbar ist. Erfindungsgemäß wird damit erreicht, dass die Folie mit einer Vielzahl von Wicklungen auf die Oberfläche des Spießes aufgebracht werden kann. Dabei hat sich insbesondere als vorteilhaft erwiesen, die Folie von unten nach oben zu wickeln, also vom kleineren Umfang zum größeren Umfang hin. Das führt dazu, dass bereits die Anfangswicklungen auf der Spießoberfläche die Form eines Behältnisses annehmen, in welchem das Spießgut aufgenommen ist. Hierdurch ist eine günstigere Kraftverteilung auf die Folie erreichbar als bei der umgekehrten Wicklung, die von der Seite mit dem größeren Umfang ausginge.

Mit einer erfindungsgemäßen Weiterbildung der Vorrichtung ist vorgesehen, dass der Wickeltisch wenigstens ein Drehelement mit zumindest einem Aufnahmeelement zur kippfreien Aufnahme des Spießes aufweist und dass das Drehelement mit einem Drehantrieb versehen ist. In vorteilhafter Weise ist somit möglich, den Spieß mit freibleibender Spießspitze auf dem Wickeltisch anzuordnen, wobei die Anordnung kippfrei festgelegt wird. Hierdurch wird erreicht, dass der Spieß bis zur Spießspitze vollständig umwickelbar ist.

Mit einer weiteren erfindungsgemäßen Weiterbildung der Vorrichtung ist vorgesehen, dass das Drehelement mit einer Drehsteuerung versehen ist. Daraus ergibt sich als Vorteil, dass der Spieß beim Umwickeln kontinuierlich gedreht werden kann und die Drehung in Abhängigkeit von Parametern wie beispielsweise Folienzug, Spießgewicht und Spießabmessungen gesteuert werden kann. Die Drehsteuerung des Drehelements ermöglicht es, das Spießgut gleichmäßig zu umwickeln, sowie die Drehbewegung bei Bedarf zu variieren.

Erfindungsgemäß ist vorgesehen, dass der Folienwickler wenigstens einen Rollenhalter zur Aufnahme der Folienrolle aufweist. Der Folienwickler ist dabei in einem Abstand vom Drehelement angebracht, sodass die Folie vom Spieß aus tangential über das Spießgut gewickelt werden kann.

Dies wird dadurch erreicht, dass der Rollenhalter Antriebs- und/oder Bremsmittel aufweist, welche das abrollen der Folie bremsen und einen Folienzug auf die Folie bringen, wodurch die Folie gestrafft wird. Es ist vorgesehen, dass das Folienband von der Folienrolle über eine Bremswalze geführt ist.

Um eine günstige Verteilung der Spannung auf die gesamte Breite der Folie zu bringen ist vorgesehen, dass der Folienwickler Kipp- und/oder Neigemittel zur Verstellung der Folienrolle in einem Winkel zur Spießachse aufweist. Dabei wird die Folienrolle in einer Weise geneigt, welche mit der Ausrichtung der Oberfläche korrespondiert, an welcher die Folie am Spießgut zur Anlage kommt.

Das Abwickeln des Folienbandes von der Folienrolle wird dadurch erleichtert, dass der Folienwickler wenigstens eine Umlenkwalze zur Führung des Folienbands aufweist. Es ist zumindest eine Umlenkwalze nach der Bremswalze vorgesehen. Eine weitere Umlenkwalze kann vor der Bremswalze angeordnet sein. Die Folie wird dabei über die Umlenkwalze zum Spieß geführt.

Erfindungsgemäß ist vorgesehen, dass der Folienwickler einen Linearantrieb mit einer Wickelsteuerung aufweist und dass die Wickelsteuerung eine Folienzugsteuerung und/oder eine Vorschubsteuerung des Linearantriebs umfasst. Der Linearantrieb bewegt den Folienwickler im Wesentlichen in Richtung der Spießachse. In einer bevorzugten Ausführungsform erfolgte hierzu die Kraftübertragung mittels eines Kettenantriebs. Der Linearantrieb gewährleistet, dass während des Umwickelns jede Wicklung eine vorbestimmte Steigung erhält, so dass sich die Einzelnen Wicklungen des Folienbandes um ein entsprechendes Maß überlappen. Um das Reißen des Folienbandes während des Umwickelns zu verhindert ist vorgesehen, dass die Wickelsteuerung den Folienzug beziehungsweise Linearantrieb steuert. Hierzu ist vorgesehen dass die Wickelsteuerung eine Folienzugsteuerung beziehungsweise eine Vorschubsteuerung umfasst.

Zur Abstimmung der Drehbewegung des Spießes mit der Bewegung der Folie ist vorgesehen, dass die Drehsteuerung und die Wickelsteuerung miteinander korrespondieren.

Mit einer weiteren Ausführungsform ist vorgesehen, dass der Folienwickler in Abhängigkeit der materialspezifischen Kennwerte der Folie regelbar ist. Dies bedeutet, dass Linearantrieb sowie Bremswalze die Materialkennwerte des Folienmaterials berücksichtigen. Dies kann durch Erfassung der Parameter beim Einrichten der Vorrichtung erfolgen oder aber durch Sensoren vor beziehungsweise während des Abwicklungsvorganges erfasst werden.

Um eine sichere und vollständig dichte Verpackung mit der Folienwicklung zu erreichen, ist weiter vorgesehen, dass der Drehantrieb des Drehelements beziehungsweise der Linearantrieb des Folienwicklers in Abhängigkeit der Spießgröße, des Spießumfangs und/oder des Spießgewichts regelbar ist.

Des Weiteren ist erfindungsgemäß vorgesehen, dass der Spieß eine Spießachse, einen am Befestigungsende angeordneten Spießgutteller und einen Spießfuß aufweist. Der Spießgutteller ist dabei so auf der Spießachse angeordnet, dass das Spießgut auf dem Spieß gehalten wird, während der Spieß mit Fleischlagen bepackt und anschließend mit Folie umwickelt wird.

Zur Aufnahme des Spießes auf dem Drehelement ist vorgesehen, dass der Spießfuß wenigstens ein Befestigungselement aufweist und dass das Befestigungselement mit Aufnahmeelementen des Wickeltisches zur kippfreien Aufnahme des Spießes korrespondiert. Von der Erfindung ist dabei vorgesehen, dass das Befestigungselement eine kreuzförmiges Verankerungselement mit Kreuzarmen ist, welches am Drehelement in Halteklammern eingerastet werden kann, wobei die Halteklammern um die Kreuzarme greifen und so eine kippfreie Anordnung des Spießes auf dem Wickeltisch und ein gefahrloses Umwickeln des Spießes mit Folienband unter Aufbringung von Folienzug gewährleistet ist.

Um beim Bepacken des Spießes mit Fleisch das Verankerungselement vor Verunreinigungen zu schützen ist vorgesehen, dass der Spießfuß sich vom Spießgutteller ausgehend in Richtung des Befestigungselementes zumindest in einem ersten Abschnitt zu einer Verjüngung verjüngt.

Dies wird dadurch erreicht, dass der Spießfuß einen Boden aufweist, an welchem das Befestigungselement mit dem Verankerungselement ausgebildet beziehungsweise angeordnet ist und dass der Boden gegenüber der Verjüngung breiter ausgebildet ist.

Dabei ist vorgesehen, dass der Spießfuß die Form eines Rotationskörpers aufweist. Das Verankerungselement kann dazu in den Rotationskörper, welcher vorzugsweise aus einem Edelstahl oder Kunststoff besteht, eingelassen sein. Es ist vorgesehen, dass die Mantelwandung des Rotationskörpers bis auf den Wickeltisch reicht, so dass Eine Verschmutzung des Verankerungselements verhindert wird, während der Spieß bepackt und umwickelt wird.

Des Weiteren wird die erfindungsgemäße Aufgabe gelöst mit einem Verfahren gemäß Anspruch 17. Die diesbezüglich nachgeordneten Ansprüche stellen erfinderische Verfahrensvarianten dar.

Danach sind in vorteilhafter Weise von der Erfindung ein oder mehreren der folgenden Verfahrensschritte vorgesehen,
a. der Spieß wird über den Spießfuß auf dem Drehelement kippfrei verankert;
b. elastisches Folienband wird mit wenigstens mehr als einem Wurf im Wesentlichen parallel zur Spießachse um das Spießgut vorgespannt;
c. elastisches Folienband wird mit wenigstens mehr als einer Wicklung vom Spießfuß ausgehend um das Spießgut gewickelt.

Die Vorspannung mit elastischem Folienband wird dabei parallel zur Spießachse vorgenommen. Dies kann manuell erfolgen, indem die Folienrolle mehrfach von unten nach oben und auf der jeweils anderen Seite des Spießes umgekehrt um das Spießgut geführt wird und mit Folienzug vorgespannt wird. Diese Vorspannung bewirkt, dass das Spießgut beim Umwickeln mit Folienband senkrecht zur Spießachse im Wesentlichen formstabil bleibt und sich nicht unter Folienzug nach oben über die Spießspitze drücken lässt.

Hierzu ist es erforderlich, dass der Spieß mit der Spießspitze frei nach oben gerichtet, vorzugsweise vertikal angeordnet ist und auf dem Drehelement kippfrei verankert wird. Erfindungsgemäß ist dabei vorgesehen, dass der Spießgutteller beim Vorspannen mit der elastischen Folie am Spießgut fest angelegt wird.

Eine weitere Verfahrensvariante wird dadurch zur Verfügung gestellt, dass zum Überwerfen der Folie um das Spießgut zur Erreichung der Vorspannung die Rotationsachse der Folienrolle im Verhältnis zur Drehrichtung des Spießguts geneigt wird. Wird der Überwurf der Folie vor dem Umwickeln des Spießes im Umfang automatisiert vorgenommen, ist erfindungsgemäß vorgesehen, zur Erreichung der Vorspannung die Spießachse exzentrisch um die Drehachse des Drehelement bewegt wird, vorzugsweise zu einer Nutationsbewegung geneigt wird.

Des Weiteren wird die Vorspannung erfindungsgemäß dadurch verbessert, dass die Vorspannung der elastischen Folie in Richtung der Spießachse so gewählt wird, dass das Spießgut beim anschließendem Umwickeln im Umfang zusammengehalten und eine Ausdehnung des Spießguts über die freie Spießspitze verhindert wird.

Zur Befestigung des Spießguttellers am Spieß ist vorgesehen, dass der Spießfuß beim Umwickeln des Spießes im Umfang teilweise, vorzugsweise maximal bis zur Verjüngung des Spießfußes, mit umwickelt wird. Wird der Spieß nach dem Umwickeln zur weiteren Verarbeitung vom Spießfuß getrennt, kann der Spießgutteller mit der Folie fest an das Spießgut gepresst werden.

Erfindungsgemäß ist vorgesehen, dass beim Umwickeln des Spießes im Umfang der Folienwickler in einer Weise linear nach oben bewegt wird, die eine teilweise Überlappung der Folienwicklungen auf dem Spieß gewährleistet.

Des Weiteren ist vorgesehen, dass der Spieß nach vollständiger dichter Umwicklung des Spießguts vom Spießfuß getrennt wird. Dabei ist vorgesehen, dass die über den Spießfuß überstehende Folienwicklung beim Trennen gedehnt und nach dem Trennen, vorzugsweise durch elastisches oder thermisches Schrumpfen, unter dem Spießgutteller dicht um die Spießachse gelegt wird.

Wird der Spieß vom Spießfuß getrennt, kann er aus dem Steckgestell entnommen werden. Anschließend wird er zur weiteren Verarbeitung und Lagerung geleitet.

Eine bevorzugte Ausführungsform des Steckgestells weist eine Vierkantachse auf, welche zusammen mit einem Spießrohr die Spießachse bildet, wobei die Vierkantachse ein durchrutschen des Spießrohres verhindert. Andere mechanische Lösungen sind zu diesem Zweck von der Erfindung ebenfalls umfasst.

Vor dem Umwickeln wird vorzugsweise manuell vom Bedienpersonal aus dem Folienwickler ein Stück Folienband gezogen und um den Spießgutteller gelegt. Danach beginnt ein programmgesteuerter Prozess, der den Folienwickler und das Drehelement des Wickeltischs in eine korrespondierende Bewegung versetzt.

Der Folienwickler verändert bei Rotation des Drehelements mit dem befestigten Spieß in vorbestimmter Weise seine lineare Position parallel zur Spießachse. Eine vorteilhafte Wicklung erfolgt vom Spießfuß nach oben, so dass der Spieß von unten nach oben in das Folienband eingewickelt wird.

Dabei wird der Prozess über Sensoren oder Schalter im Zugriffsbereich des Bedienpersonals elektronisch gestartet, unterbrochen beziehungsweise gestoppt. Über eine Wirbelstrombremse wird die Bremswalze am Folienwickler gesteuert und mit unterschiedlichem Bremsdruck Folienzug auf die Folie gebracht.

Die Wicklungen um den bepackten Spieß können auf diese Weise unterschiedlich gestrafft werden. Insbesondere kann so die typische Konusform eines Döner-Spießes festgelegt werden.

Nach Vollendung der Umwicklung wird durch eine kurze Rückwärtsbewegung des Drehelements der Spießfuß mit dem Steckgestell vom Drehelement gelöst, wobei der Spießfuß arretiert bleibt und das Drehelement aus den Halterungen herausfährt.

Wird der Spieß vom Spießfuß getrennt, kann das Steckgestell mit dem fertig eingewickelten Spieß auf ein neben dem Wickeltisch befindliches Transportband geführt und zur weiteren Verarbeitung abtransportiert werden.

Die Erfindung umfasst neben Döner-Spießen jedwede Art von Spießen, insbesondere Lebensmittelspieße, welche zur Weiterverarbeitung in Grillvorrichtungen vorgesehen sind.

Im Folgenden ist die Erfindung anhand von Zeichnungen erläutert.

Es zeigen
- Figur 1: eine schematische Vorrichtung und Verfahren der Spießherstellung;
- Figur 2: einen Spieß mit Spießgut auf einem Spießfuß am Wickeltisch;
- Figur 3: eine Anordnung nach Fig. 2 mit Folienwickler;
- Figur 4: einen Folienwickler aus Sicht der Zugrichtung.

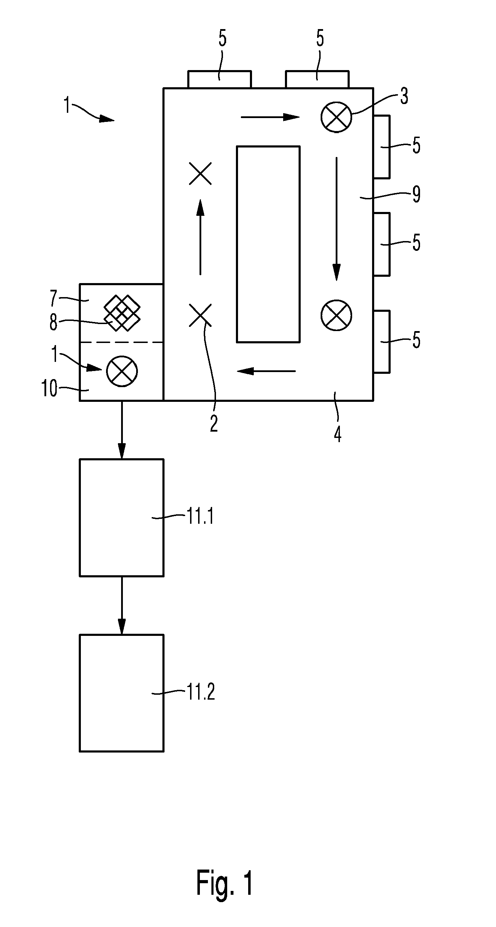

Figur 1 zeigt eine Vorrichtung 1 und ein Verfahren zur Verpackung eines Spießes 2 mit einseitig auf den Spieß 2 aufgestecktem Spießgut 3. Insbesondere ist eine schematische Anordnung einzelner Herstellungsprozesse innerhalb eines Inline-Verfahrens dargestellt. Der Spieß ist in der Figur mit einem Kreuz und der Spieß mit Spießgut ist durch einen durchkreuzten Kreis angedeutet.

Der Spieß 2 bewegt sich dabei in vertikaler Anordnung auf einer Förderanlage 4, wobei einseitig Spießgut aufgesteckt wird. Hierzu wird der Spieß an einzelnen Bepackstationen 5 aus der Förderlinie entnommen oder kontinuierlich auf der Förderanlage bepackt.

Beim Bepacken werden, insbesondere bei Döner-Spießen, die für Grillvorrichtungen vorgesehen sind, als Spießgut 3 vorbereitetes Fleisch in Form von Lappen mehrlagig übereinander auf dem Spieß 2 aufgespießt. Durch Anordnung und Aufstecken der Fleischlappen auf dem Spieß 2 wird eine im Wesentlichen konische Spießform des Spießgutes 3 erzeugt.

Hierzu wird der Spieß 2 vorbereitet. Bei der Vorbereitung wird ein leerer Spieß 2, das sogenannte Steckgestell 6, am Vorbereitungstisch 7 mit Folien 8 versehen und anschließend auf eine Förderanlage 9 verbracht. Die Förderanlage 9 bewegt die die Spieße 2 zu den Bepackungsplätzen 5, wo die Spieße 2 vorzugsweise manuell bepackt werden. Anschließend wird der bepackte Fleischspieß 2 zur Verpackungsanlage 10 mit der erfindungsgemäßen Vorrichtung 1 befördert und in Folie eingewickelt. Schließlich wird der Spieß 2 auf eine Aufhängungsvorrichtung 11.1 gehängt und in einer Kühlanlage 11.2 gekühlt.

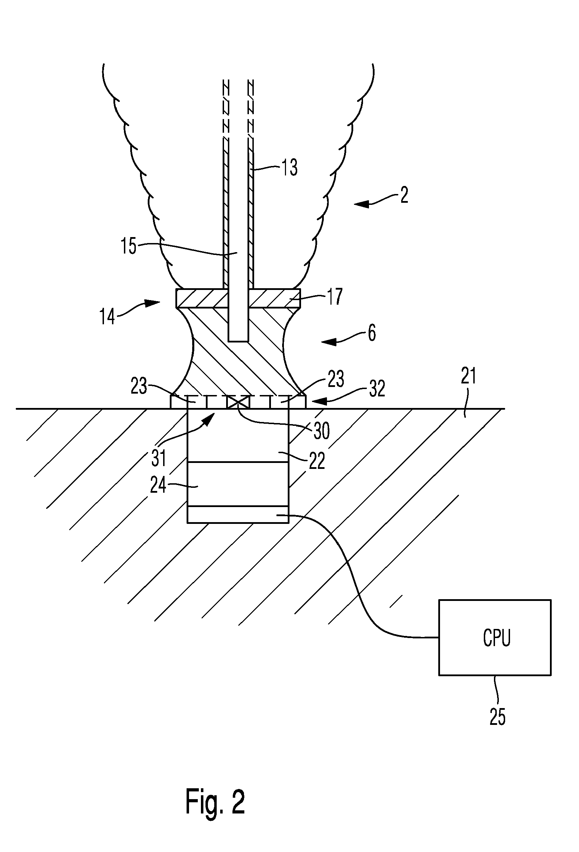

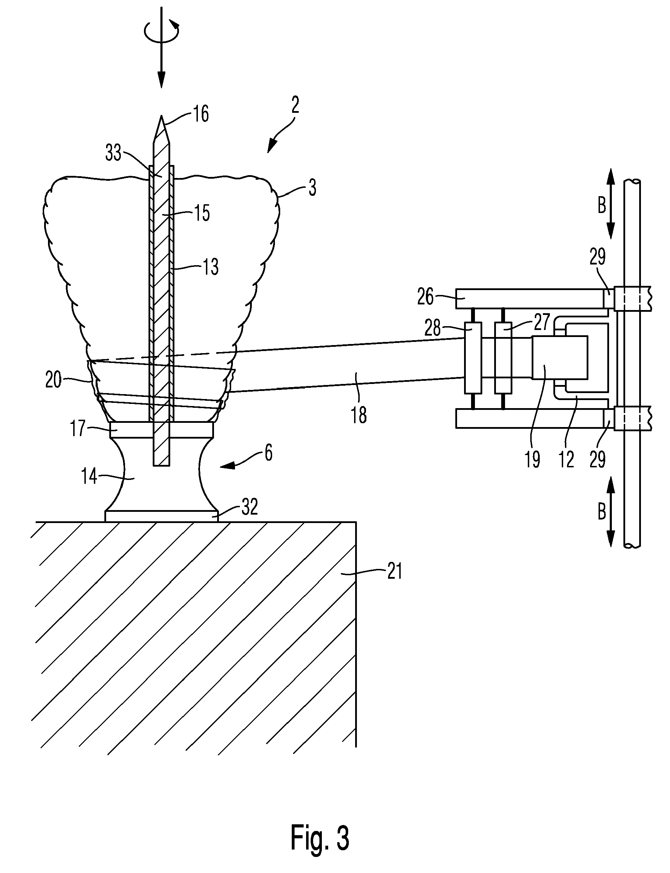

Wie in Fig. 2 gezeigt, wird zur Herstellung des Fleischspießes 2 ein Spießrohr 13 auf dem Steckgestell 6 angeordnet. Das Steckgestell 6 umfasst den Spießfuß 14, die Spießstange 15 mit der Spießspitze16, welche in Figur 3 sichtbar ist. Etwas oberhalb des der Spießspitze 15 abgewandten Endes weist das Steckgestell 6 Haltemittel für einen Spießgutteller 17 aufweist. Zwischen dem Spießgutteller 17 und der Spießspitze 16 werden vorgewürzte Fleischlappen lagenweise aufgesteckt. Sobald der Fleischspieß 2 vollständig aufgebaut ist, wird die typische Kegelform geschnitten.

Zum Transport und für die Lagerung werden die Spieße 2 in Kunststofffolie 18 verpackt. Es hat sich für die Verpackung insbesondere wegen der im serienmäßigen Herstellungsverfahren ständig wechselnden Abmessungen der Spieße 2 als zweckmäßig erwiesen, vertriebsfertige Spieße 2 mit Folienband 18 zu umwickeln.

Dabei wird etwa 30-50 cm breites Folienband 18 von Folienrollen 19 abgewickelt und in mehreren Lagen 20 dicht im Umfang um den Fleischspieß 2 gewickelt.

Die Vorrichtung 1 umfasst einen Wickeltisch 21 zur Aufnahme des Spießes 2 und wenigstens einen Folienwickler 26 zur Aufnahme einer Folienrolle 19 mit bandförmig aufgewickelter Folie 18 und zum Abwickeln der Folie 18. Der Folienwickler 26 ist, wie in Fig. 3 dargestellt, in einem vorbestimmten Abstand vom Spießgut 3 im Wesentlichen parallel zur Spießachse A linear bewegbar ist. Die Bewegungsrichtung ist mit Pfeilen B dargestellt.

Die Folie 18 wird mit einer Vielzahl von Wicklungen auf die Oberfläche des Spießes 3 aufgebracht. Dabei wird die Folie 18 in der dargestellten Vorrichtung 1 von unten nach oben gewickelt, also vom kleineren Umfang zum größeren Umfang des Spießes 2 hin.

In vorteilhafter Weise nehmen dabei bereits die Anfangswicklungen wie in Fig. 3 sichtbar ist, auf der Spießoberfläche die Form eines Behältnisses an, in welchem das Spießgut 3 aufgenommen ist. Hierdurch ist eine günstige Kraftverteilung auf die Folie 18 erreichbar.

Der Wickeltisch 21 weist hierzu ein Drehelement 22 mit zumindest einem Aufnahmeelement 23 zur kippfreien Aufnahme des Spießes 2 auf. Das Drehelement 22 ist mit einem Drehantrieb 24 versehen. Der Spieß 2 wird in vorteilhafter Weise mit nach oben freibleibender Spießspitze 16 auf dem Wickeltisch 21 anzuordnen, wobei die Anordnung kippfrei an den Aufnahmeelementen 23 festgelegt ist. Somit ist der Spieß 2 bis zur Spießspitze 16 vollständig frei umwickelbar.

Das Drehelement 22 und der Drehantrieb 24 sind mit einer Drehsteuerung 25 versehen. Die Drehsteuerung 25 steuert den Drehvorlauf des Spießes 2 beim Umwickeln. Dabei wird der Spieß 2 kontinuierlich gedreht und die Drehung in Abhängigkeit von Parametern wie beispielsweise Folienzug, Spießgewicht und Spießabmessungen gesteuert. Die Drehsteuerung 25 des Drehelements 22 ermöglicht es, das Spießgut 3 gleichmäßig zu umwickeln, sowie die Drehbewegung bei Bedarf zu variieren.

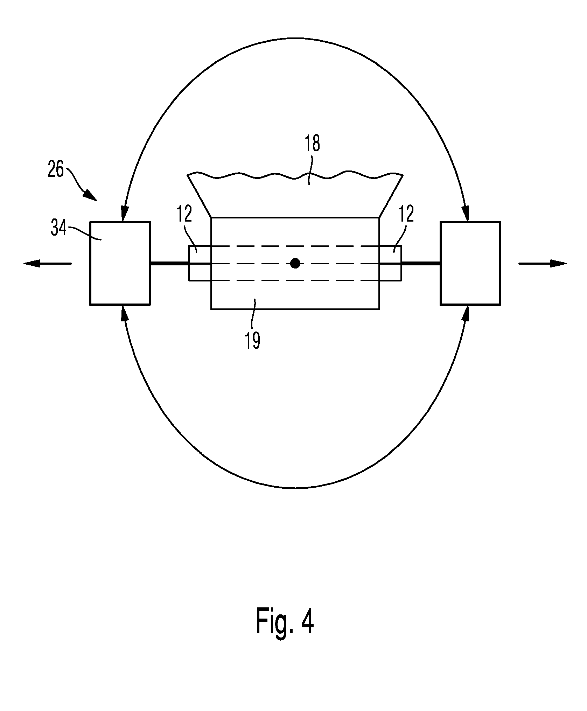

In Fig. 4 ist der Folienwickler 26 dargestellt. Der Folienwickler 26 weißt wenigstens einen Rollenhalter 12 zur Aufnahme der Folienrolle 19 auf. Der Folienwickler 26 ist dabei in einem Abstand vom Drehelement 22 angebracht. Die Folie 18 wird um den Spieß 2 herum tangential über das Spießgut 3 gewickelt.

Dies wird dadurch erreicht, dass der Rollenhalter 12 Antriebs- und/oder Bremsmittel aufweist. Die Antriebsmittel 34 betreiben die Folienrolle 19. Das Bremsmittel ist in der Zeichnung nicht sichtbar. Es ist vorgesehen, dass das Bremsmittel die Bremswalze 27 beaufschlagt, so dass das Folienband 18 beim Abrollen von der Folienrolle 19 gebremst wird, wobei ein Folienzug durch die Zugkraft durch die Drehbewegung des Drehelements 22 auf die Folie 18 gebracht wird. Hierdurch wird die Folie 18 gestrafft. Dazu wird das Folienband 18 von der Folienrolle 19 aus über eine Bremswalze 27 zum Spieß 2 geführt.

Um eine günstige Verteilung der Spannung auf die gesamte Breite der Folie 18 zu bringen ist vorgesehen, dass der Folienwickler 26 Kipp- und/oder Neigemittel zur Verstellung der Folienrolle 19 in einem Winkel zur Spießachse 15 aufweist. Dabei ist vorgesehen, dass die Antriebsmittel 34 auch das Kippen und Neigen der Folienrolle 19 bewirken. Dabei wird die Folienrolle 19 in einer Weise geneigt, welche mit der Ausrichtung der Oberfläche korrespondiert, an welcher die Folie 18 am Spießgut 3 zur Anlage kommt.

Das Abwickeln des Folienbandes 18 von der Folienrolle 19 wird dadurch erleichtert, dass der Folienwickler 26 wenigstens eine Umlenkwalze 28 zur Führung des Folienbands 19 aufweist. Es ist zumindest eine Umlenkwalze 28 nach der Bremswalze 27 vorgesehen. Eine weitere Umlenkwalze 28 kann vor der Bremswalze 27 angeordnet sein, was in der Zeichnung nicht gezeigt ist. Die Folie 18 wird dabei über die nachgeordnete Umlenkwalze 28 unmittelbar zum Spieß 2 geführt.

Der Folienwickler 26 weist einen Linearantrieb 29 mit einer Wickelsteuerung auf. Die Wickelsteuerung umfasst eine Folienzugsteuerung und/oder eine Vorschubsteuerung des Linearantriebs 29 und ist in der Zeichnung ebenfalls nicht dargestellt. Der Linearantrieb 29 bewegt der Folienwickler 26 in Richtung der Pfeile B im Wesentlichen parallel der Spießachse 15. Dies gewährleistet, dass während des Umwickelns jede Wicklung 20 eine vorbestimmte Steigung erhält, so dass sich die Einzelnen Wicklungen des Folienbandes 18 um ein entsprechendes Maß überlappen, wie in Fig. 3 am Spießfuß 14 dargestellt ist.

Um das Reißen des Folienbandes 18 während des Umwickelns zu verhindert, ist vorgesehen, dass die Wickelsteuerung den Folienzug beziehungsweise Linearantrieb 29 steuert. Hierzu ist vorgesehen dass die Wickelsteuerung die Folienzugsteuerung beziehungsweise die Vorschubsteuerung aufweist.

Zur Abstimmung der Drehbewegung des Spießes 2 mit der Bewegung der Folie 18 ist vorgesehen, dass die Drehsteuerung 25 und die Wickelsteuerung miteinander korrespondieren.

Mit einer weiteren Ausführungsform ist vorgesehen, dass der Folienwickler 26 in Abhängigkeit der materialspezifischen Kennwerte der Folie 18 regelbar ist. Dies bedeutet, dass Linearantrieb 29 sowie Bremswalze 27 die Materialkennwerte des Folienmaterials berücksichtigen. Die Bremswalze kann dabei über eine Wirbelstrombremse regelbar ausgebildet werden. Durch Erfassung der Parameter beim Einrichten der Vorrichtung oder während des Wickelvorganges durch Sensoren können die Kennwerte individuell erfasst und verarbeitet werden, sowie für den Abwicklungsvorgang am Wickelsteuerung beziehungsweise der Drehsteuerung bereitgestellt werden.

Dabei hat sich als zweckmäßig erwiesen, dass der Drehantrieb 24 des Drehelements 22 beziehungsweise der Linearantrieb 29 des Folienwicklers 26 in Abhängigkeit der Spießgröße, des Spießumfangs und/oder des Spießgewichts regelbar ist. Dies ermöglicht eine sichere und vollständig dichte Verpackung mit der Folienwicklung.

Der Spieß 2 weißt neben der Spießachse 15, welche vorzugsweise als vierkantige Achse ausgebildet ist, dem am Befestigungsende angeordneten Spießgutteller 17 und dem Spießfuß 14 zur Aufnahme des Spießes 2 auf dem Drehelement 22 wenigstens ein Befestigungselement 31 auf. Das Befestigungselement 31 ist als Teil des Drehelements 22 ausgebildet. Das Befestigungselement korrespondiert mit Aufnahmeelementen des Drehelements 22 des Wickeltisches 21, so dass der Spieß 2 kippfreien vom Drehelement 22 aufgenommen wird. Das Befestigungselement 31 ist dabei ein kreuzförmiges Verankerungselement 30 mit Kreuzarmen, welches am Drehelement 22 in Halteklammern 23 eingerastet werden kann, wobei die Halteklammern 23 um die Kreuzarme greifen und so eine kippfreie Anordnung des Spießes 2 auf dem Wickeltisch 21 und ein gefahrloses Umwickeln des Spießes 2 mit Folienband 18 unter Aufbringung von Folienzug gewährleisten.

Um beim Bepacken des Spießes 2 mit Fleisch liegt das Verankerungselement 30 sowie das Befestigungselement 31 vor Verunreinigungen geschützt im Spießfuß 14. Der Spießfuß 14 verjüngt sich vom Spießgutteller 17 ausgehend in Richtung des Befestigungselementes 31 zumindest in einem ersten Abschnitt.

Der Spießfuß 14 weist einen Boden 32 auf, an welchem das Befestigungselement 31 mit dem Verankerungselement ausgebildet beziehungsweise angeordnet ist. Der Boden 32 ist gegenüber der Verjüngung breiter ausgebildet. Dabei ist vorgesehen, dass der Spießfuß 2 die Form eines Rotationskörpers aufweist, in welchem das Befestigungs- und Verankerungselement angeordnet ist. Das Verankerungselement kann dazu in den Rotationskörper, welcher vorzugsweise aus einem Edelstahl oder Kunststoff besteht, formschlüssig eingelassen sein. Es ist außerdem vorgesehen, dass die Mantelwandung des Rotationskörpers bis auf den Wickeltisch 21 reicht, so dass eine Verschmutzung des Verankerungselements verhindert wird, während der Spieß 2 bepackt und umwickelt wird.

Bei der Verpackung des Spießes 2 sind als Verfahrensschritte vorgesehen, dass der Spieß 2 über den Spießfuß 14 auf dem Drehelement 22 kippfrei verankert wird, elastisches Folienband 18 mit wenigstens mehr als einem Wurf im Wesentlichen parallel zur Spießachse 15 um das Spießgut 3 vorgespannt und elastisches Folienband 18 mit wenigstens mehr als einer Wicklung vom Spießfuß 14 ausgehend um das Spießgut 3 gewickelt wird.

Zur Vorbereitung der Wicklung erhält der Spieß 2 eine Vorspannung mit elastischem Folienband 18, welches hierzu parallel zur Spießachse 15 abwechselnd links und rechts davon um das Spießgut geführt wird, so dass das Folienband 18 mehrmals von unten nach oben und zurück geführt wird. Dies kann manuell erfolgen, indem die Folienrolle 19 mehrfach von unten nach oben und auf der jeweils anderen Seite des Spießes umgekehrt um das Spießgut 3 geführt wird und mit Folienzug vorgespannt wird. Durch geeignete Führung des Folienwicklers 26 kann die Vorspannung auch automatisiert um das Spießgut 3 geworfen werden.

Diese Vorspannung bewirkt, dass das Spießgut 3 beim Umwickeln mit Folienband 18 im Umfang, das heißt senkrecht zur Spießachse 15, im Wesentlichen formstabil bleibt und sich nicht unter Folienzug nach oben über die Spießspitze 16 drücken lässt.

Der Spieß 2 ist mit der Spießspitze 16 frei nach oben gerichtet, vorzugsweise vertikal angeordnet, und auf dem Drehelement 22 kippfrei verankert. Der Spießgutteller 17 wird bei der Wicklung der Vorspannung mit der elastischen Folie 18 fest am Spießgut 3 angelegt.

Erfindungsgemäß ist eine Verfahrensvariante vorgesehen, wobei zum Überwerfen der Folie 18 um das Spießgut zur Erreichung der Vorspannung, die Rotationsachse der Folienrolle 19 im Verhältnis zur Drehrichtung des Spießgutes 3 geneigt wird. Beim Überwerfen der Folie 18 wird dabei die Spießachse 15 exzentrisch um die Drehachse des Drehelement 22 bewegt, vorzugsweise mit einer Nutationsbewegung um den Befestigungspunkt auf dem Drehelement 22 gedreht.

Beim Umwickeln des Spießes 2 im Umfang wird der Folienwickler 26 in einer Weise linear nach oben bewegt wird, die eine teilweise Überlappung des Folienbandes 18 bei jeder Wicklung auf dem Spieß 2 gewährleistet. Schließlich wird der Spieß 2 nach vollständiger dichter Umwicklung des Spießguts 3 vom Spießfuß getrennt.

Der Spießgutteller 17 wird am Spieß 2 beim Umwickeln des Spießes 2 im Umfang vorzugsweise bis zur Verjüngung des Spießfußes 6 mit Folienband 18 umwickelt. Wird der Spieß 2 nach dem Umwickeln zur weiteren Verarbeitung vom Spießfuß 14 getrennt, kann der Spießgutteller 17 mit der Folie 18 vom Spießfuß 14 gezogen und fest mit der Folie an das Spießgut gepresst werden.

Dabei ist vorgesehen, dass die über den Spießfuß 14 überstehende Folienwicklung beim Trennen gedehnt und nach dem Trennen, vorzugsweise durch elastisches oder thermisches Schrumpfen, unter dem Spießgutteller 17 dicht um die Spießachse 15 gelegt wird. Wird der Spieß 2 vom Spießfuß 14 getrennt, kann er aus dem Steckgestell 6 entnommen werden. Alternativ wird er zur weiteren Verarbeitung und Lagerung geleitet.

Eine bevorzugte Ausführungsform des Steckgestells 6 weist eine Vierkantachse 33 auf, welche zusammen mit einem Spießrohr 13 die Spießachse 15 bildet, wobei die Vierkantachse 33 ein durchrutschen des Spießrohres 13 verhindert. Andere mechanische Lösungen sind zu diesem Zweck von der Erfindung ebenfalls umfasst.

Der Wickelvorgang kann manuell von Bedienpersonal vorbereitet, gestartet und während des Wickelns unterstützt werden. Der programmgesteuerte Wickelvorgang wird durch die Dreh- und Wickelsteuerung geregelt, wobei der Folienwickler 26 und das Drehelement 22 des Wickeltischs 21 in eine korrespondierende Bewegung versetzt werden.

Der Folienwickler 26 verändert bei Rotation des Drehelements 22 mit dem befestigten Spieß 2 in vorbestimmter Weise seine lineare Position parallel zur Spießachse 15. Eine vorteilhafte Wicklung erfolgt vom Spießfuß 14 nach oben, so dass der Spieß 2 von unten nach oben in das Folienband 18 eingewickelt wird.

Dabei wird der Prozess über Sensoren oder Schalter im Zugriffsbereich des Bedienpersonals elektronisch gestartet, unterbrochen beziehungsweise gestoppt. Über eine Wirbelstrombremse wird die Bremswalze 27 am Folienwickler 26 gesteuert und mit unterschiedlichem Bremsdruck Folienzug auf das Folienband 18 gebracht.

Die Wicklungen um den bepackten Spieß 2 können auf diese Weise unterschiedlich gestrafft werden. Insbesondere kann so die typische Konusform eines Döner-Spießes festgelegt werden.

Nach Vollendung der Umwicklung wird durch eine kurze Rückwärtsbewegung des Drehelements 22 der Spießfuß 14 mit dem Steckgestell 6 vom Drehelement 22 gelöst, wobei der Spießfuß 14 arretiert bleibt und das Drehelement 22 aus den Halterungen 23 herausfährt.

Wird der Spieß 2 vom Spießfuß 14 getrennt, kann das Steckgestell 6 mit dem fertig eingewickelten Spieß 2 auf eine neben dem Wickeltisch 21 befindliche Transportaufhängung 11 geführt und zur weiteren Verarbeitung abtransportiert werden.

Mit der erfindungsgemäßen Vorrichtung und dem Verfahren lassen sich Fleischspieße jedwede Art, insbesondere Döner-Spieße verpacken. Des Weiteren können auch sonstige Lebensmittel auf Spießen 2 verpackt werden, welche zur Weiterverarbeitung in Grillvorrichtungen vorgesehen sind.

Mit der erfindungsgemäßen Vorrichtung und dem Verfahren wird in vorteilhafter Weise erreicht, dass das Spießgut 3 beim Umwickeln in Richtung des nicht umwickelten Teils des Spießes 2 gedrückt wird, zu großer Folienzug bei der Verpackung erzeugt wird, das Fleisch durch die Folie vom Spieß gedrückt wird beziehungsweise die gewünschte typische Konusform unbeabsichtigt verändert wird. Somit ist ein Lebensmittelprodukt sicher und hygienisch herstellbar, welches hohen Anforderungen an Qualität gerecht wird, wobei Undichtigkeiten vermieden werden.

Des Weiteren wird mit der Erfindung gewährleistet, dass das auf dem Spieß angeordnete Lebensmittel gut verpackt einer Kühlung und Lagerung ausgesetzt werden kann, ohne Gefahr zu laufen, dass dadurch Schäden am Spießgut hervorgerufen werden.

Für die serienmäßige Verpackung im Inlineverfahren hat sich die manuelle Verpackungsmethode als ineffizient erwiesen. Die Erfindung stellt somit eine kostengünstige Alternative hierzu dar und ist insbesondere im Bereich kleiner Produktionslinien einfach und kostengünstig einsetzbar.

Die erfindungsgemäße Vorrichtung sowie das Verfahren zur Verpackung eines Spießes mit einseitig auf den Spieß aufgestecktem Spießgut überwinden damit die Nachteile herkömmlicher Verpackungsmethoden und stellt die Möglichkeit zur teilweisen oder vollständig automatisierten Verpackung eines Spießes mit einseitig auf den Spieß aufgestecktem Spießgut bereit, welche im Inlineverfahren einsetzbar ist und wodurch die hygienische und effiziente Verpackung dieser Lebensmittel gewährleistet bleibt.

Vorrichtung und Verfahren zur Verpackung eines Spießes mit einseitig auf den Spieß aufgestecktem Spießgut

### Bezugszeichen

- 1: Vorrichtung
- 2: Spieß
- 3: Spießgut
- 4: Förderanlage
- 5: Bepackstationen
- 6: Steckgestell
- 7: Vorbereitungstisch
- 8: Folien
- 9: Förderanlage
- 10: Verpackungsanlage
- 11 .1: Aufhängungsvorrichtung
- 11.2: Kühlanlage
- 12: Rollenhalter
- 13: Spießrohr
- 14: Spießfuß
- 15: Spießstange
- 16: Spießspitze
- 17: Spießgutteller
- 18: Kunststofffolie / Folienband
- 19: Folienrollen
- 20: Lagen
- 21: Wickeltisch
- 22: Drehelement
- 23: Aufnahmeelement / Halteklammer
- 24: Drehantrieb
- 25: Drehsteuerung
- 26: Folienwickler
- 27: Bremswalze
- 28: Umlenkwalze
- 29: Linearantrieb
- 30: Verankerungselement
- 31: Befestigungselement
- 32: Boden
- 33: Vierkantachse
- 34: Antriebsmittel

## Patentansprüche

1. Vorrichtung zur Verpackung eines Spießes mit einseitig auf den Spieß aufgestecktem Spießgut,
**dadurch gekennzeichnet,**
**dass** die Vorrichtung einen Wickeltisch zur Aufnahme des Spießes und wenigstens einen Folienwickler zur Aufnahme einer Folienrolle mit bandförmig aufgewickelter Folie und zum Abwickeln der Folie aufweist und dass der Folienwickler in einem vorbestimmten Abstand vom Spießgut im Wesentlichen parallel zur Spießachse linear bewegbar ist.

2. Vorrichtung nach Anspruch 1,
**gekennzeichnet durch**,
- wenigstens ein am Wickeltisch vorgesehenes Drehelement;
- mit zumindest einem Aufnahmeelement zur kippfreien Aufnahme des Spießes;
- wenigstens einen Drehantrieb zum Antrieb des Drehelements oder des Spießes;
- wenigstens einer Drehsteuerung für den Drehantrieb oder das Drehelement;
- wenigstens einen Rollenhalter zur Aufnahme der Folienrolle am Folienwickler;
- Antriebs- und/oder Bremsmittel zur Straffung der Folie beim Einwickeln des Spießes auf dem Rollenhalter;
- Kipp- und/oder Neigemittel zur Verstellung der Folienrolle in einem Winkel zur Spießachse auf dem Folienwickler;
- wenigstens eine Umlenkwalze zur Führung des Folienbands auf dem Folienwickler;
- einen Linearantrieb mit einer Wickelsteuerung des Folienwicklers, wobei die Wickelsteuerung eine Folienzugsteuerung und/oder eine Vorschubsteuerung des Linearantriebs umfasst und dass die Kraftübertragung vorzugsweise mittels Kettenantrieb erfolgt.

3. Vorrichtung nach einem oder mehreren der Ansprüche 1 und 2,
mit einem oder mehreren der folgenden Merkmale:
- die Dreh- und Wickelsteuerung korrespondieren miteinander;
- der Folienwickler ist in Abhängigkeit der materialspezifischen Kennwerte der Folie regelbar;
- Dreh- und Linearantrieb des Folienwicklers sind in Abhängigkeit der Spießgröße, des Spießumfangs sowie des Spießgewichts regelbar.

4. Vorrichtung nach einem oder mehreren der Ansprüche 1 bis 3,
**dadurch gekennzeichnet,**
**dass** der Spieß eine Spießachse, einen am Befestigungsende angeordeten Spießgutteller und einen Spießfuß mit einem oder mehreren der folgenden Merkmalen aufweist:
- der Spießfuß weist wenigstens ein Befestigungselement auf;
- das Befestigungselement korrespondiert mit Aufnahmeelementen des Wickeltisches zur kippfreien Aufnahme des Spießes;
- der Spießfuß verjüngt sich vom Spießgutteller ausgehend in Richtung des Befestigungselementes zumindest in einem ersten Abschnitt zu einer Verjüngung;
- der Spießfuß weist einen Boden auf, an welchem das Befestigungselement ausgebildet und/oder angeordnet ist;
- der Boden ist gegenüber der Verjüngung breiter ausgebildet
- der Spießfuß weist die Form eines Rotationskörpers auf;

5. Verfahren zur Verpackung eines Spießes mit einseitig auf den Spieß aufgestecktem Spießgut mittels einer Vorrichtung nach einem oder mehreren der Ansprüche 1 bis 4,
**gekennzeichnet durch** einen oder mehreren der folgenden Verfahrensschritte,
- der Spieß wird über den Spießfuß auf dem Drehelement kippfrei verankert;
- elastisches Folienband wird mit wenigstens mehr als einem Wurf im Wesentlichen parallel zur Spießachse um das Spießgut vorgespannt;
- elastisches Folienband wird mit wenigstens mehr als einer Wicklung vom Spießfuß ausgehend um das Spießgut gewickelt.

6. Verfahren nach Anspruch 5,
**dadurch gekennzeichnet,**
**dass** der Spieß mit der Spießspitze frei nach oben gerichtet, vorzugsweise vertikal angeordnet, auf dem Drehelement verankert wird.

7. Verfahren nach einem der Ansprüche 5 oder 6,
**gekennzeichnet durch** einen oder mehreren der folgenden Verfahrensschritte:
- der Spießgutteller wird beim Vorspannen mit der elastischen Folie am Spießgut fest angelegt;
- zum Überwerfen der Folie um das Spießgut wird zur Erreichung der Vorspannung die Rotationsachse der Folienrolle im Verhältnis zur Drehrichtung des Spießguts geneigt;
- zum Überwerfen der Folie um das Spießgut wird zur Erreichung der Vorspannung die Spießachse exzentrisch um die Drehachse des Drehelement bewegt, vorzugsweise mit einer Nutationsbewegung geneigt;
- die Vorspannung der elastischen Folie in Richtung der Spießachse wird so gewählt, dass das Spießgut beim anschließendem Umwickeln im Umfang zusammengehalten und eine Ausdehnung des Spießguts über die freie Spießspitze verhindert wird;
- der Spießfuß wird beim Umwickeln des Spießes im Umfang teilweise, vorzugsweise maximal bis zur Verjüngung des Spießfußes, mit umwickelt.

8. Verfahren nach einem oder mehreren der Ansprüche 5 bis 7,
**dadurch gekennzeichnet,**
**dass** beim Umwickeln des Spießes im Umfang der Folienwickler in einer Weise linear nach oben bewegt wird, die eine teilweise Überlappung der Folienwicklungen auf dem Spieß gewährleistet.

9. Verfahren nach einem oder mehreren der Ansprüche 5 bis 8,
**dadurch gekennzeichnet,**
**dass** die Achse der Folienrolle im Wesentlichen mit der Neigung der Spießgutoberfläche am Ort der Anlage der Folie korrespondiert.

10. Verfahren nach einem oder mehreren der Ansprüche 5 bis 9,
**dadurch gekennzeichnet,**
**dass** der Spieß nach vollständiger dichter Umwicklung des Spießguts vom Spießfuß getrennt wird.

11. Verfahren nach Anspruch 10,
**dadurch gekennzeichnet,**
**dass** die über den Spießfuß überstehende Folienwicklung beim Trennen gedehnt und nach dem Trennen, vorzugsweise durch elastisches oder thermisches Schrumpfen, unter dem Spießgutteller dicht um die Spießachse gelegt wird.

12. Vorrichtung nach einem oder mehreren der vorstehenden Ansprüche,
**dadurch gekennzeichnet,**
**dass** der Folienwickler in einem Gehäuse angeordnet ist und dass das Gehäuse manuell handhabbar, frei im Raum um den Spieß bewegbar ist.
